# EUROPÄISCHE PATENTSCHRIFT

(11) **EP 3 283 192 B1**
(45) Veröffentlichungstag und Bekanntmachung des Hinweises auf die Patenterteilung: **11.12.2019**
(21) Anmeldenummer: 16702028.8
(22) Anmeldetag: 29.01.2016
(51) Int. Cl.: B01D 35/027, B01D 29/23, B01D 29/92

(54) **FILTERVORRICHTUNG SOWIE FILTERELEMENT**
FILTER DEVICE AND FILTER ELEMENT
DISPOSITIF FILTRANT ET ÉLÉMENT FILTRANT

(30) Priorität: 14.04.2015 DE 102015004795
(43) Veröffentlichungstag der Anmeldung: 21.02.2018
(73) Patentinhaber: RT-Filtertechnik Gmbh, 88048 Friedrichshafen (DE)
(72) Erfinder: FRIES, Uwe, 07743 Jena (DE); GROBE, Carsten, 99425 Weimar (DE)
(74) Vertreter: Bartels und Partner, Patentanwälte
(86) Internationale Anmeldenummer: PCT/EP2016/000150
(87) Internationale Veröffentlichungsnummer: WO 2016/165797

(56) Entgegenhaltungen:
- WO-A1-2009/096879
- WO-A1-2009/109212
- DE-A1- 3 812 136
- DE-U1-202005 014 690
- US-A- 3 199 679

## Beschreibung

Die Erfindung betrifft eine Filtervorrichtung, insbesondere vorgesehen zum Einbau in einen Fluid-Vorratstank, mit den Merkmalen im Oberbegriff von Anspruch 1. Die Erfindung betrifft des Weiteren ein Filterelement, insbesondere vorgesehen für eine dahingehende Filtervorrichtung.

Bei der Filtration mit dahingehenden Intank-Filtervorrichtungen kommt es bei hohen Arbeitsdrücken und/oder großen Fluidmengen beim Durchtritt des abzureinigenden Fluids durch das Filterelement zum Spritzen und zur Schaumbildung; Letzteres bedingt durch Gas-, insbesondere Luftblasen, die im, dem Fluid-Vorratstank vorangehenden, hydraulischen Arbeitskreis in das Fluid, insbesondere in Form von Hydrauliköl gelangen können. Eine dahingehende Schaumbildung im Fluid tritt insbesondere dann ein, wenn dahingehende Filtervorrichtungen für mobile Maschinen zum Einsatz kommen, wie beispielsweise Bagger, Rad- oder Teleskoplader etc., die mit einer entsprechenden Arbeitshydraulik versehen sind, beispielsweise in Form von mittels Pumpen ansteuerbarer und versorgbarer Hydraulikzylinder. Um zu vermeiden, dass bei den bekannten Lösungen das aus dem Filterelement herausspritzende und schaumbildende Fluid in unmittelbaren Kontakt kommt mit der sonstigen Fluid- oder Ölmenge im Vorratstank, sind die Filterelemente in entsprechenden Umfassungsgehäusen innerhalb des Tanks gekammert, die jeweils eine Art Vorberuhigungsraum oder Vorkammer bilden, in denen das abgereinigte Fluid zur Ruhe kommen kann und etwaige Gasblasen nach oben hin auftriebsbedingt austreten können. Die genannten Beruhigungskammern nehmen aber innerhalb des eigentlichen Tankvolumens relativ viel Bauraum ein und führen letztendlich somit auch zu groß aufbauenden Vorratstanks als Ganzes, und insbesondere bei den angesprochenen hohen Arbeitsdrücken und/oder sehr großen Mengen an zu filtrierendem Fluid genügen die Vorkammervolumen regelmäßig nicht, in ausreichendem Maße eine Beruhigung des Öls nebst Luftaustritt vor Abgabe in den eigentlichen Vorratstank zu bewerkstelligen.

Auch kommt es im Rahmen des modernen Downsizing bei solchen mo-bilen Maschinen unter Beibehalten der Leistungsfähigkeit der hydraulischen Anlage zu einer zwangsläufigen Verkleinerung technischer Anlagenteile wie den Tankvolumina, so dass sich die Eintrag- und Beruhigungszeiten für das Fluid im Tank zwangsläufig verringern, was wiederum mit einer erhöhten Schaumbildung einhergeht.

Um der dahingehenden Schaumbildung zu begegnen, sind im Stand der Technik bereits Lösungen vorgeschlagen worden, beispielsweise in Form der EP 2 249 941 B1, die eine gattungsgemäß ausgebildete Filtervorrichtung nebst Filterelement betrifft. Bei dieser bekannten Lösung sind die mehreren Durchlassstellen der Gehäusewand teilweise unterhalb eines jeweils veränderbaren Fluidniveaus im Vorratstank und der andere Teil der Durchlassstellen oberhalb dieses Fluidniveaus angeordnet. Dadurch dass bei der bekannten Lösung ferner die jeweiligen Durchlassstellen Teil mindestens einer Sieb- oder Gitterstrukturlage sind, die in der Gehäusewand angeordnete bevorzugt fensterartige Durchlassbereiche abdeckt, und dass die freien Öffnungsquerschnitte für die Durchlassstellen der Gehäusewand derart gewählt sind, dass etwaig im gereinigten Fluid sich befindende Gasblasen an der derart perforierten Gehäusewand abscheidbar und/oder für eine fluidniveaunahe Abgabe sammelbar sind, strömt das in den Fluidströmungsraum eintretende, vom jeweiligen Elementmaterial gereinigte Fluid im Bereich des jeweiligen Fluidniveaus und oberhalb desselben in laminarer Weise über die zuordenbaren Durchlassstellen in den Vorratstank, und die unerwünschte Spritz- oder Schaumbildung beim in den Vorratstank austretenden Fluid ist derart mit Sicherheit vermieden.

Aufgrund der Druckdifferenz zwischen dem einströmenden, nicht gereinigten Fluid und dem abströmenden, gereinigten Fluid kann Letzteres im Fluidströmungsraum über das Fluidniveau im Tank angehoben werden bei gleichmäßiger Verteilung entlang der Innenseite der Gehäusewand mit den Durchlassstellen, wozu auch Kapillareffekte mit beitragen können, und der derart entstehende gleichmäßige Fluidfilm ermöglich dann den spritz- und schaumfreien Austritt aus den genannten Durchlassstellen quer zu der Gehäusewand.

Für die bekannte Filtervorrichtung wird ein Filterelement in vorzugsweise austauschbarer Weise eingesetzt, bei dem sich ein plissiertes Elementmaterial für die Abreinigung der Partikelverschmutzung aus dem Fluid zwischen zwei Endkappen erstreckt, wobei das genannte Elementmaterial von einem Stützrohr umfasst ist, das zur Erhöhung der Druckstabilität des Elementmateriales dieses nach außen abstützt, und der dahingehende Stützmantel verfügt über entsprechende Durchlassöffnungen in Form einer Perforation, die es erlaubt, dass das Fluid von innen nach außen zunächst das Elementmaterial und dann das Stützrohr des Filterelementes in radialer Austrittsrichtung passiert.

Die WO 2009/109212 A1 beschreibt eine Filtervorrichtung, insbesondere vorgesehen zum Einbau in einen Fluid-Vorratstank, mit mindestens einem, vorzugsweise austauschbaren Filterelement, dessen Elementmaterial in radialer Richtung gesehen von innen nach außen von einem Fluid durchströmbar ist, das von einem Durchlassöffnungen aufweisenden Stützrohr umfasst ist, das jeweils unter Beibehalten eines vorgebbaren Radialabstandes und unter Bildung eines Fluidströmungsraumes von einer Gehäusewand eines Gehäuses umgeben ist, die mehrere Durchlassstellen aufweist.

DE 20 2005 014 690 U1 und die WO 2009/096879 A1 offenbaren jeweils eine Filtervorrichtung, bei der zumindest ein Teil der Durchlassöffnungen im Stützrohr des Filterelementes eine Strömungsleiteinrichtung aufweist, die dem Fluid eine Strömungsrichtung geben, die von der radialen Strömungsrichtung verschieden ist.

Die US 3 199 679 A offenbart Durchlassöffnungen in einem Stützrohr mit einer Strömungsleiteinrichtung.

Ausgehend von dem vorstehend genannten Stand der Technik liegt der Erfindung die Aufgabe zugrunde, die bekannte Lösung dahingehend weiter zu verbessern, dass ein erhöhter Luftaustrag aus dem Fluid, insbesondere in Form von Hydraulikmedium, in einem Fluid-Vorratstank geschaffen ist.

Eine dahingehende Aufgabe löst eine Filtervorrichtung mit den Merkmalen des Patentanspruches 1 in seiner Gesamtheit sowie ein Filterelement mit der Merkmalsausgestaltung des weiteren unabhängigen Patentanspruches 9.

Dadurch dass gemäß dem kennzeichnenden Teil des Patentanspruches 1 zumindest ein Teil der Durchlassöffnungen im Stützrohr des Filterelementes eine Strömungsleiteinrichtung aufweist, die dem Fluid eine Strömungsrichtung geben, dass die Durchtrittsöffnungen von der radialen Strömungsrichtung durch das Filterelement verschieden ist, und dass die Strömungsleiteinrichtung dem Fluid, das durch das Stützrohr hindurchtritt, eine Strömungsrichtung in der Art einer Drallströmung um das Stützrohr herum gibt, ergibt sich eine verbesserte Entfernung der Luftanteile auch in Blasenform aus dem zu filtrierenden Fluid, insbesondere in Form von Hydrauliköl, und es findet ein verbesserter Luftaustrag aus dem Fluid statt. Des Weiteren ist die über die jeweilige Strömungsleiteinrichtung die Koaleszenzfähigkeit für die Luftblasen oder Lufttröpfchen innerhalb des Fluids erhöht, die sich dergestalt zu größeren Blasen oder Tropfen aufgrund ihrer Oberflächenspannung vereinigen, was wiederum aufgrund ihres Auftriebsverhaltens eine verbesserte Abgabe der derart gesammelten Luft aus dem Fluid in die Umgebung ermöglicht, indem die Luftabgabe über das jeweilige Fluidniveau in den darüber liegenden Luftraum des Fluid-Vorratstanks zwanglos hinein erfolgt.

Des Weiteren kommt es durch die gerichtete Fluidströmung, bedingt durch die jeweilige Strömungsleiteinrichtung zu keiner Art Kurzschluss vor und hinter dem Stützrohr, sondern vielmehr ist sichergestellt, dass auf jeden Fall die zwischen Außenseite des plissierten Elementmaterials und zugewandter Innenseite des Stützrohrs vorhandenen Luftmengen definiert über die Strömungsleiteinrichtung auch abgegeben werden können. Dabei hat es sich als vorteilhaft erwiesen, die Drallströmung entgegen dem Uhrzeigersinn um das Filterelement herum zu richten, wobei bevorzugt alle Strömungsleiteinrichtungen mit ihren freien Öffnungsquerschnitten in eine gemeinsame Richtung zu weisen haben, um dergestalt den Luftaustritt durch ungewollte Turbulenzen aus dem Fluidmedium nicht zu behindern. Es besteht aber auch ohne Weiteres die Möglichkeit, die Drallrichtung umgekehrt, also im Uhrzeigersinn, zu wählen.

Als besonders vorteilhaft hat es sich ferner erwiesen, wenn die jeweilige Strömungsleiteinrichtung des Stützrohres den zugehörigen freien Öffnungsquerschnitt derart begrenzt, dass diese gegenüber der Längsachse des Filterelementes um 10° bis 80°, vorzugsweise um etwa 30° bis 60°, besonders bevorzugt um etwa 45° geneigt ist, was sich günstig auf die zu erreichende Drallströmung um das Filterelement herum auswirkt.

Die jeweilige Strömungsleiteinrichtung ist aus dem Material des Stützrohres gebildet und nach außen vorstehend als Strömungstasche geformt, deren oberer Rand den Öffnungsquerschnitt für die Fluidabgabe der Strömungsleiteinrichtung begrenzt. Mithin ist die Strömungsleiteinrichtung taschenartig aus dem Stützrohrmantel von innen nach außen ausgeprägt, ausgestanzt oder ausgeschnitten, was eine besonders kostengünstige Herstellung des Stützrohres und mithin des Filterelementes als Ganzes ermöglicht.

Bei einer besonders bevorzugten Ausführungsform der erfindungsgemäßen Filtervorrichtung weist neben der jeweiligen Strömungsleiteinrichtung das Stützrohr weitere Durchlassöffnungen auf, die gruppenweise die jeweilige Strömungsleiteinrichtung umfassen. Vorzugsweise ist dabei die Summe der freien Öffnungsquerschnitte der Strömungsleiteinrichtungen kleiner als die der Durchlassöffnungen im Stützrohr. Während die Strömungsleiteinrichtungen mit ihren freien Öffnungsquerschnitten die Drallströme um das Filterelement herum bewirken, führen die sonstigen Durchlassöffnungen in der Art einer Perforation im Stützrohr nach wie vor dazu, dass das Fluid in radialer Richtung von innen nach außen das Stützrohr durchquert, was unerwünschte Druckanstiege im Innern des Stützrohres vermeiden hilft, die ansonsten gegebenenfalls die freie Filtration durch das plissierte Elementmaterial beeinträchtigen könnten. Ferner hat es sich als vorteilhaft erwiesen, sowohl die Strömungsleiteinrichtungen des Stützrohres als auch die sonstigen radialen Durchlassöffnungen in Gruppen und in definierten Abständen zueinander um das Stützrohr herum zu gruppieren.

Gegenstand ist auch ein Filterelement, insbesondere vorgesehen für eine dahingehende Filtervorrichtung, mit einem sich zwischen zwei Endkappen erstreckenden Elementmaterial, das von einem Stützrohr mit Durchlassöffnungen umfasst ist, wobei sich mit diesem Filterelement verbesserte Luftaustragwerte erreichen lassen, sofern zumindest ein Teil der Durchlassöffnungen im Stützrohr des genannten Filterelementes eine Strömungsleiteinrichtung aufweisen, die dem Fluid eine Strömungsrichtung geben, die von der Radialströmungsrichtung durch das Stützrohr verschieden ist. Erfindungsgemäß ist vorgesehen, dass die Strömungsleiteinrichtung dem Fluid, das durch das Stützrohr hindurchtritt, eine Strömungsrichtung in der Art einer Drallströmung um das Stützrohr herum gibt.

Im Folgenden wird die erfindungsgemäße Lösung anhand verschiedener Ausführungsbeispiele nach der Zeichnung näher erläutert. Dabei zeigen in prinzipieller und nicht maßstäblicher Weise die
- Fig. 1: einen Längsschnitt durch ein Ausführungsbeispiel nach dem Stand der Technik;
- Fig. 2: teilweise aufgeschnitten dargestellt ein weiteres Ausführungsbeispiel der Filtervorrichtung nach dem Stand der Technik, das jedoch weitestgehend der Ausführungsform nach der Fig. 1 entspricht;
- Fig. 3: eine perspektivische Schrägansicht auf ein Filterelement, wie es für eine der Filtervorrichtungen nach den Figuren 1 und 2 Verwendung findet;
- Fig. 4: eine Draufsicht auf das Filterelement nach der Fig. 3 in aufgestelltem Zustand;
- Fig. 5: eine vergrößerte Teilansicht des in Fig. 4 mit B dargestellten fiktiven Kreises;
- Fig. 6, 6a, 6b: eine Draufsicht auf eine geänderte Ausführungsform eines Stützrohres mit abgewickeltem Stützrohrmantel bzw. in Blickrichtung der mit X und Y gekennzeichneten Pfeile jeweils eine Stirnansicht auf den Stützrohrmantel nach der Fig. 6; und
- Fig. 7: eine vergrößerte Wiedergabe des in Fig. 6 mit A bezeichneten Kreisausschnitts.

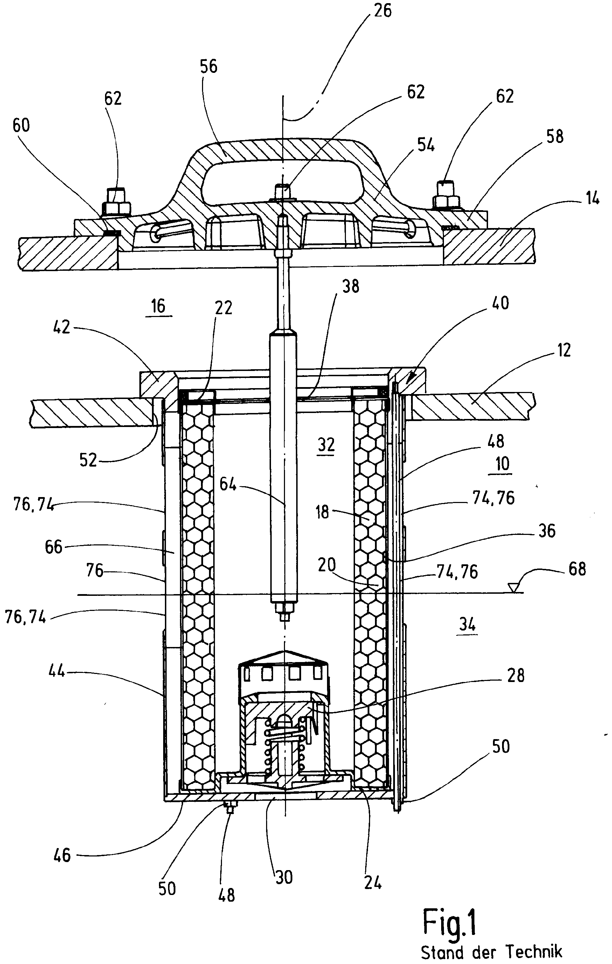

Die in der Fig. 1 im Längsschnitt gezeigte Filtervorrichtung dient dem Einbau in einen behälterartigen Fluid-Vorratstank 10, vergleichbar der Einbausituation nach der EP 2 249 941 B1. Von dem Fluid-Vorratstank 10 ist gemäß Darstellung nach der Fig. 1 nur die obere Tankwand 12 gezeichnet, sowie eine zugehörige Aufnahmewand 14 zum Festlegen der Filtervorrichtung als Ganzes. Eine ähnliche Einbausituation für Filterelemente und Filtervorrichtungen ist auch in der EP 1 419 807 B1 aufgezeigt. Zwischen den gezeigten Wandabschnitten 12,14 verläuft ein Einlaufkanal 16 für regelmäßig mit Partikeln verschmutztes Fluid, wie es beispielsweise aus dem Hydraulikkreis einer nicht näher dargestellten Arbeitshydraulik einer Baumaschine oder dergleichen stammt.

Die Filtervorrichtung weist des Weiteren ein Filterelement 18 auf mit vorzugsweise plissierter Filtermatte als Elementmaterial 20; ansonsten bildet das Filterelement 18 im Wesentlichen eine Art Kreishohlzylinder aus. Das Elementmaterial 20 ist zwischen einer oberen Endkappe 22 und einer unteren Endkappe 24 als Teile des Filterelementes 18 geführt. Die untere Endkappe 24 weist mittig und koaxial zur Längsachse 26 der Filtervorrichtung verlaufend ein an sich übliches Bypassventil 28 auf, das bei von partikulärer Verschmutzungen zugesetzter Elementmaterial-Matte 20 öffnet und unter Umgehung des Elementmaterials 20 das Fluid ungereinigt über eine untere Bypassöffnung 30 in den Vorratstank 10 abströmen lässt.

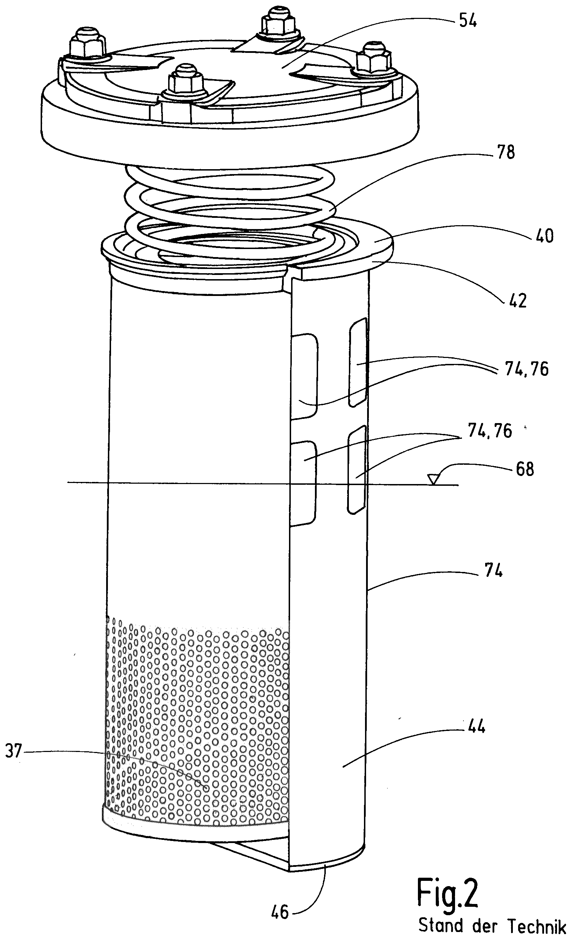

Da das Elementmaterial 20 von innen nach außen in radialer Richtung durchströmt wird, also die Durchströmung von der Innenseite 32 des Filterelementes 18 in Richtung des Inneren 34 des Fluid-Vorratstanks 10 erfolgt, ist das Elementmaterial 20 zur Aussteifung nach außen hin von einem mantelförmigen Stützrohr 36 umfasst, das vorzugsweise gleichfalls kreiszylindrisch ausgebildet ist und entsprechende Durchlassöffnungen 37 aufweist, die im Stand der Technik in der Art einer Perforation im Stützrohr 36 ausgebildet sind (s. Fig. 2). Die dahingehenden Durchlassöffnungen 37 im Stützrohr 36 dienen dem Durchtritt des mittels des Elementmaterials 20 abgereinigten Fluids. Ein entsprechend geformter Stützmantel (nicht dargestellt) könnte aber dem Grunde nach auch der Außenkontur des plissierten Elementmaterials 20 nachfolgen und insofern zur Erhöhung der Druckstabilität des Elementes nach außen die Abstützung vornehmen. Auch ein dahingehender Stützmantel würde dann über entsprechende Durchlassöffnungen für das Fluidmedium verfügen. Der Fluideintritt des ungereinigten Fluids, vom Einlaufkanal 16 kommend, erfolgt über die obere Eintrittsöffnung 38 des Filterelementes 18 in Richtung der genannten Innenseite 32 desselben.

Das Filterelement 18 ist in einem als Ganzes mit 40 bezeichneten Gehäuse aufgenommen, das an seiner Oberseite eine flanschartige Verbreiterung 42 aufweist, mit der sich die Filtervorrichtung in diesem Bereich an der Oberseite der oberen Tankwand 12 abstützt. An die genannte Verbreiterung 42 schließt sich wiederum nach unten hin eine zylindrische Gehäusewand 44 an, die zu ihrer Unterseite 46 hin topfförmig geschlossen ausgebildet ist, bis auf die genannte Bypassöffnung 30. Vorzugsweise bildet insoweit die dahingehende Unterseite 46 der Gehäusewand 44 ein eigenständiges Bodenteil aus und die Gehäusewand 44 stützt sich mit ihrem jeweils freien Ende an einer absatzartigen Stufe des Bodenteils 46 ab sowie an der flanschartigen Verbreiterung 42. Damit der beschriebene Verbund des Gehäuses 40 in der in der Fig. 1 gezeigten Zusammenbaulage verbleibt, sind außenumfangsseitig zum Elementmaterial 20 mit Stützrohr 36 Haltestäbe 48 angeordnet, von denen in der Fig. 1 nur ein Haltestab 48 ganz gezeigt ist und von den beiden anderen dahingehend eingesetzten Haltestäben 48 ist in der Fig. 1 nur ein weiterer Stab 48 der Einfachheit halber mit seinem unteren Abschlussende gezeigt, das insoweit unter die Unterseite des Bodenteils 46 hervorragt. In diesem Bereich ist der jeweilige Haltestab 48 über eine Gewindemutter 50 verschraubt und das obere Ende des jeweiligen Haltestabes 48 ist über ein entsprechendes Innengewinde in die flanschartige Verbreiterung 42 stationär eingedreht. Dergestalt kann unter einer vorgegebenen Vorspannung die Gehäusewand 44 zwischen Verbreiterung 42 und Bodenteil 46 festgelegt werden.

Damit das Gehäuse 40 in die obere Tankwand 12 einsetzbar ist, ist in diese eine entsprechende kreiszylindrische Ausnehmung 52 eingebracht, deren Durchmesser jedenfalls größer ist als der Außendurchmesser im Bereich des Überganges zwischen der flanschartigen Verbreiterung 42 und dem Außenumfang der Gehäusewand 44. Ferner ist ein Deckelteil 54 als Teil der Filtervorrichtung vorhanden mit einem Handgriff 56 für den erleichterten Ein- und Ausbau der Filtervorrichtung in den gezeigten Tank 10. Das Deckelteil 54 weist eine absatzartige Verbreiterung 58 auf, die auf der Oberseite der Aufnahmewand 14 aufsteht, und ein Absatz der Verbreiterung 58 greift in den freien Innendurchmesser der Aufnahmewand 14 unter Anlage an dieselbe ein. Zur Fluidabdichtung dient in diesem Bereich ein ringförmiges Dichtelement 60 üblicher Bauart. Diametral zur Längsachse 26 angeordnet sind einander gegenüberliegend Festlegeschrauben 62 vorhanden, die dem Festlegen des Deckelteils 54 an der Aufnahmewand 14 dienen. Nach Lösen der Schrauben 62 lässt sich die Filtervorrichtung aus dem Tank 10 ausbauen und in umgekehrter Montageabfolge wieder einbauen. Die dahingehenden Montagevorgänge sind notwendig, sofern ein verbrauchtes Filterelement 18 gegen ein Neuelement zu tauschen ist.

Konzentrisch zur Längsachse 26 verläuft ein Magnetstab 64 innerhalb der Filtervorrichtung, der insbesondere die Funktion eines Permanentmagneten hat und der in Blickrichtung auf die Fig. 1 gesehen mit seinem oberen Ende im Deckelteil 54 festgelegt, insbesondere dort eingeschraubt ist, und mit seinem anderen gegenüberliegenden freien Ende durchgreift er die Innenseite 32 des Filterelementes 18. Der dahingehende Magnetstab 64 erlaubt eine Abscheidung von magnetisierbaren Metallbestandteilen im zu filternden Fluid. Sowohl Magnetstab 64 als auch Bypassventil 28 sind optional und für die Funktion der Filtervorrichtung als Ganzes nicht zwingend vorzusehen.

Wie die Fig. 1 des Weiteren zeigt, nimmt die zylindrische Gehäusewand 44 einen vorgebbaren Radialabstand zu der Außenumfangsfläche des Filterelementes 18 ein, so dass insoweit ein Fluidströmungsraum 66 gebildet ist. Der dahingehende Fluidströmungsraum 66 erstreckt sich parallel zur Außenumfangsfläche des Filterelementes 18, insbesondere erstreckt er sich in axialer Längsrichtung parallel zur Längsachse 26 der Vorrichtung zwischen der Oberseite des Bodenteils 46 und der Unterseite der flanschartigen Verbreiterung 42. Ferner ist der Fluidströmungsraum 66 nach außen hin im Wesentlichen von der Gehäusewand 44 begrenzt und nach innen hin von der Außenumfangsfläche des Elementmaterials 20 in Form der Filtermatte. Sofern das mantelförmige Stützrohr 36 für das Elementmaterial 20 zum Einsatz kommt, bildet die dahingehende Außenumfangsfläche die Begrenzung für den Fluidströmungsraum 66.

Bei dem Ausführungsbeispiel nach der Fig. 1 ist ein Fluidniveau 68 innerhalb des Vorratstanks 10 eingezeichnet, und das Filterelement 18 und mithin der Fluidströmungsraum 66 liegen teilweise unter dem Niveau 68 und teilweise oberhalb desselben. In Abhängigkeit von der zuströmenden Fluidmenge über den Einlaufkanal 16 an abzureinigendem Fluid oder die abströmende für die Arbeitshydraulik (nicht dargestellt) benötigte Menge ändert sich das Fluidniveau 68 gegenüber der gezeigten Momentanposition in der Fig. 1. Der Fluidströmungsraum 66 ist im Übrigen von seinem Strömungsraum her bis auf den Durchgriff der einzelnen Haltestäbe 48 nicht beeinträchtigt.

Das Ausführungsbeispiel nach der Fig. 2 ist gegenüber der Ausführungsform nach der Fig. 1 insoweit geändert, als dass eine Druckfeder 78 vorgesehen ist, die sich zwischen der Unterseite des Deckelteiles 54 und dem Gehäuse 40 erstreckt, um bei festgelegtem Deckelteil 54 das Gehäuse 40 der Filtervorrichtung gegen die Oberseite der oberen Tankwand 12 zu drücken und dergestalt die Filtervorrichtung innerhalb des Tanks 10 zu fixieren.

Wie des Weiteren die Fig. 2 zeigt, die zumindest teilweise eine Außenansicht der Filtervorrichtung nach der Fig. 1 betrifft, sind in der Gehäusewand 44 des Gehäuses 40 fensterartige Durchlassstellen 74 vorhanden, die in zwei voneinander beabstandeten Gruppen ringartig übereinander liegend und umfangsseitig umlaufend die Gehäusewand 44 durchgreifen. Die beiden benachbarten Gruppen weisen einen gleichen Axialabstand zueinander auf, und die einzelnen Durchlassöffnungen 74 innerhalb einer Gruppe weisen in radialer Umfangsrichtung gesehen ebenfalls gleiche Abstandsmaße zueinander auf. Wie die Darstellung nach den Figuren 1 und 2 weiter zeigen, ist bei gegebenem Fluidniveau 68 die untere Gruppe an Durchlassstellen 74 vom Fluidniveau noch teilweise abgedeckt, und die darüber liegende Gruppe endet oberhalb der Niveauoberseite und ohne in diese einzugreifen. Im vorliegenden Ausführungsbeispiel soll innerhalb der Gehäusewand 44 und an deren Innenseite anliegend mindestens eine Sieb- oder Gitterstrukturlage 76 angeordnet sein, die einen durchgehenden Zylindermantel bildet und alle gleich ausgebildeten fensterartigen Durchlassstellen 74 randseitig übergreift. Damit die jeweilige Strukturlage 76 an der Innenseite der Gehäusewand 44 verbleibt, kann diese über eine nicht näher dargestellte Punktschweißung entsprechend festgelegt sein. Grundsätzlich besteht auch die Möglichkeit, die angegebene Siebstruktur in die Gehäusewand 44 des Gehäuses 40 einzustanzen, so dass insoweit die Siebstruktur einstückiger Bestandteil der Gehäusewand 44 ist. Ferner kann anstelle einer einzigen Strukturlage 76 dem Grunde nach aber auch für jede Fensteröffnung als Durchlassstelle 74 diese ein eigenständiges Gitter, auch mehrlagig ausgebildet, aufweisen. Die Wahl der freien Öffnungsquerschnitte für die Durchlassstellen 74 der jeweiligen Strukturlage 76 hängt von Umgebungsbedingungen ab, wie beispielsweise der Viskosität des eingesetzten Fluids, insbesondere in Form des Hydrauliköls, die letztendlich auch mit von Umgebungstemperaturwerten abhängig ist. Die aufgezeigten Fensteröffnungen 74 als Durchlassstellen im Gehäuse 40 respektive der Gehäusewand 44 sind vorzugsweise in Rechteckform realisiert; andere Öffnungsgeometrien wären aber insoweit gleichfalls möglich.

Nimmt man nun die Filtervorrichtung nach den Figuren 1 und 2 in Betrieb, durchströmt Fluid das mattenförmige Elementmaterial 20 von innen nach außen und wird dabei abgereinigt. Da ein Teil des im Tank 10 bevorrateten Fluids, das unterhalb des Niveaus 68 sich befindet, in die unteren Durchlassstellen 74 einströmt, füllt sich insoweit der unterhalb des Niveaus 68 befindliche Einströmungsraum 66 mit Fluid mit der Folge, dass weiter von der Innenseite 32 her nachströmendes Fluid nach oben hin verdrängt wird, so dass eine filmartige Hohlsäule im Fluidströmungsraum 66 mit Fluid entsteht, das sich an der Innenseite der Gehäusewand 44 anlegt, sowie an den Durchlassstellen der insoweit perforierten Sieb- oder Gitterstrukturlage 76. Die dahingehend hochsteigende Fluidanordnung oberhalb des Fluidniveaus 68 tritt durch die Durchlassöffnungen in den fensterartigen Durchlassstellen 74 aus, was weitgehend laminar erfolgt und Spritz- oder Aufschäumvorgänge während des Durchtritts sind insoweit mit Sicherheit vermieden. In Abhängigkeit der auftretenden Fluidmengen und des Fluiddrucks, wie sie sich über den Fluidzulauf im Einlaufkanal 16 ergeben, kann der dahingehend laminare Fluidaustritt im Bereich des Fluidniveaus 68 stattfinden oder entsprechend darüberliegend. In Abhängigkeit der Volumengröße für den Fluidströmungsraum 66 kann bei entsprechend enger Radialauslegung, also bei geringem radialen Abstandsmaß, zur Außenseite des Filterelementes 18 für die Aufwärtsbewegung sich ein unterstützender Kapillareffekt mit einstellen.

In Abhängigkeit der Maschenweite für die Strukturlage 76 lassen sich die freien Öffnungsquerschnitte für die Durchlassöffnungen derart wählen, dass etwaig im gereinigten Fluid sich befindende Gasblasen, wie Luftblasen, an der derart perforierten Strukturlage 76 sich abscheiden, wobei für eine fluidniveaunahe Abgabe des Gases die Blasen an der Strukturlage 76 gesammelt und für eine erleichterte Abgabe unter dem Einfluss ihrer Oberflächenspannung im Volumen vergrößert werden, was einem Koaleszenzeffekt gleichkommt. Mithin perlen diese vergleichbar den CO₂-Perlen bei einem kohlesäurehaltigen Getränk aus der Filtervorrichtung heraus nach oben, so dass insoweit das Fluid im Tank 10 wirksam entgast ist. Da hydraulische Arbeitseinrichtungen häufig empfindlich gegen solchen Gaseintrag sind, ist insoweit der dahingehenden Störungsgefahr bereits begegnet.

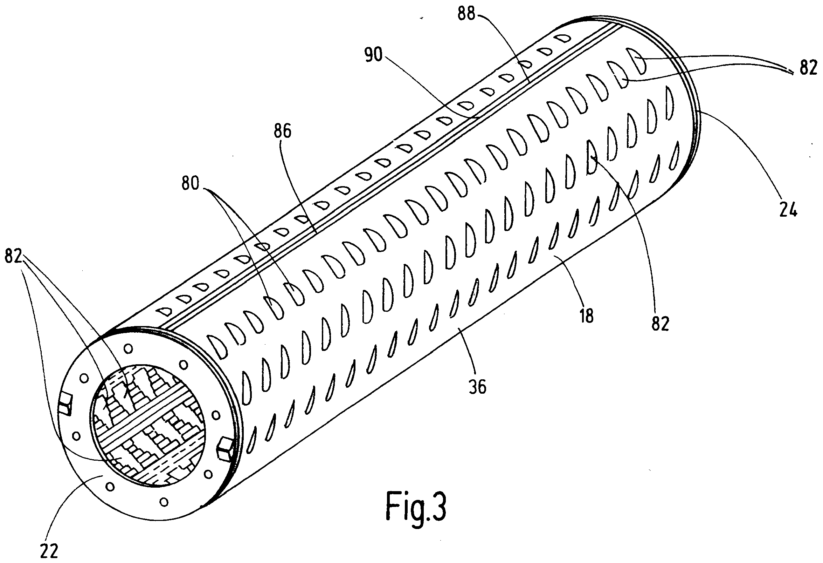

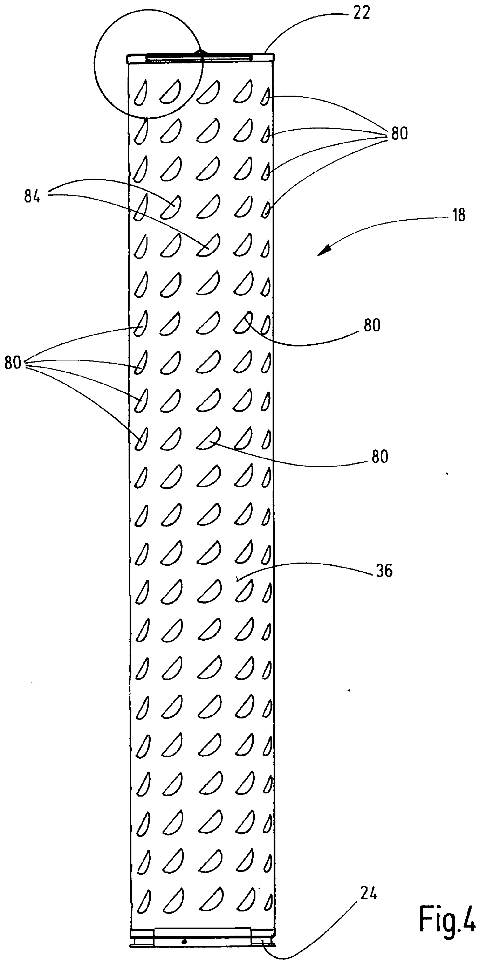

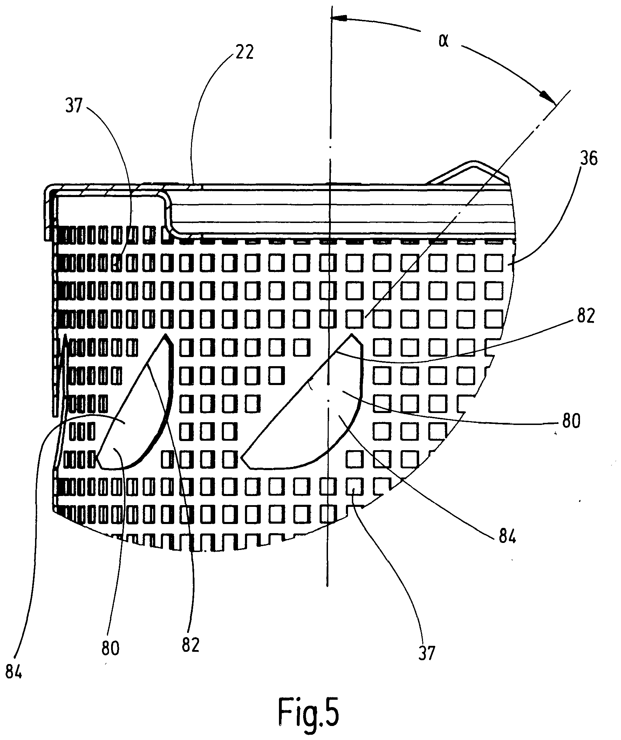

Um den dahingehenden Gasblasenaustrag aus dem Fluid noch weiter zu verbessern, ist erfindungsgemäß vorgesehen, dass zumindest ein Teil der Durchlassöffnungen 37 im Stützrohr 36 des Filterelements 18 eine Strömungsleiteinrichtung 80 aufweist, die dem Fluid eine Strömungsrichtung geben, die von der bisher beschriebenen radialen Strömungsrichtung des Fluids von innen nach außen durch das Filterelement 18 verschieden ist. Wie insbesondere die Darstellung nach den Figuren 3 bis 5 für ein Ausführungsbeispiel eines dahingehend gestalteten Stützrohrs 36 zeigen, ermöglicht die jeweilige Strömungsleiteinrichtung 80 dem Fluid, das durch das Stützrohr 36 hindurchtritt, eine Strömungsrichtung in der Art einer Drallströmung um das Stützrohr 36 herum. Gemäß der Darstellung nach den Figuren 3 bis 5 weisen alle Strömungsleiteinrichtungen 80 mit ihren freien Öffnungsquerschnitten 82, die nur in der Fig. 3 zu sehen sind, in eine gemeinsame Richtung, was eine helixförmige Drallströmung für das Durchtrittsfluid ergibt. Wie sich insbesondere aus der Darstellung nach den Figuren 4 und 5 ergibt, begrenzt die jeweilige Strömungsleiteinrichtung 80 des Stützrohres 36 einen freien Öffnungsquerschnitt 82, der gegenüber der Längsachse 26 des Filterelementes um einen Winkel α von vorzugsweise 45° geneigt ist. Andere Neigungseinstellungen zwischen 30° bis 60° wären aber gleichfalls möglich, um dergestalt auch in vorgebbarem Rahmen den Verlauf der Drallströmung um das Filterelement 18 herum einstellen zu können.

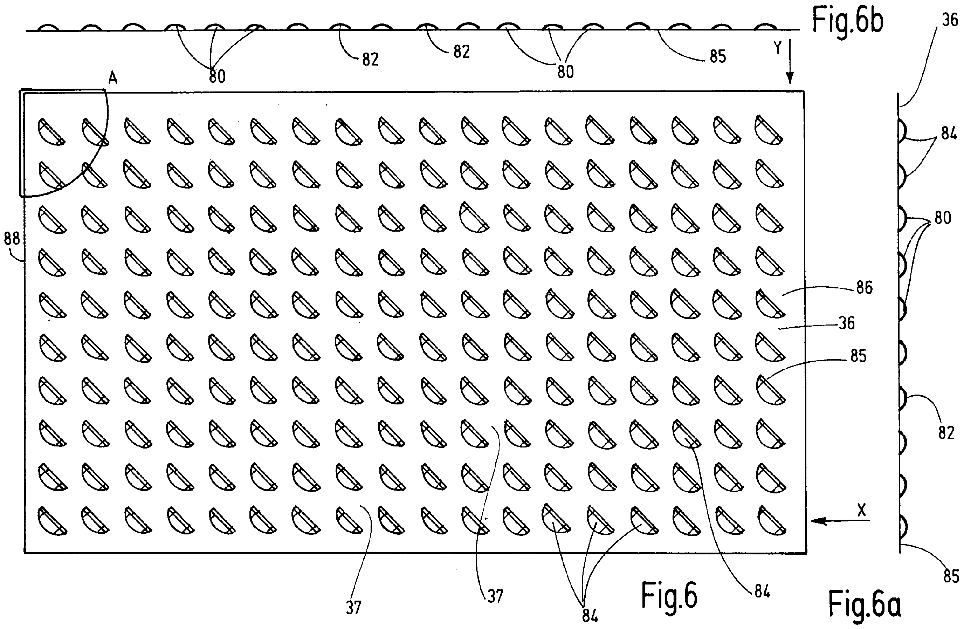

Wie des Weiteren die Fig. 3 zeigt, ist die jeweilige Strömungsleiteinrichtung 80 aus dem Mantelmaterial des Stützrohres 36 nach außen vorstehend als Strömungstasche 84 ausgebildet, die bis auf ihren freien Öffnungsquerschnitt 82 an ihrer Oberseite einstückig in das Stützrohrelementmaterial übergeht. Die dahingehende Strömungstasche 84 kann aus dem Stützrohrmantel 85 (vgl. Fig. 6, 6a, 6b) von innen nach außen ausgeprägt, ausgeschnitten oder vorzugsweise ausgestanzt sein. Der Stanzvorgang kann derart vonstattengehen, dass quasi von selbst bei Bildung der Strömungstasche 84 diese im oberen Bereich von dem Stützrohrmantelmaterial 85 abreißt, und dann den schlitzartigen Öffnungsquerschnitt 82 mit ihrem Umfassungsrand freigibt, wobei zum Stützrohr 36 hin die Tasche 84 vom darüber liegenden Mantelmaterial 85 des Stützrohres 36 begrenzt ist. Wie sich aus der Darstellung nach den Figuren 3 bis 5 ergibt, erfolgt im Hinblick auf die Schrägstellung der jeweiligen Strömungstasche 84 von links unten nach rechts oben um den Winkel α von 45° gegenüber der Senkrechten eine Drallströmung, die im Uhrzeigersinn um das Filterelement 18 herumgeführt ist.

Neben der angesprochenen jeweiligen Strömungsleiteinrichtung 80 weist das Stützrohr 36 weitere Durchlassöffnungen 37 auf, die gruppenweise die jeweilige Strömungsleiteinrichtung 80 umfassen, wobei die Summe der freien Öffnungsquerschnitte 82 von Strömungsleiteinrichtungen 80 kleiner als die der sonstigen Durchlassöffnungen 37 im Stützrohr 36 ist. Die dahingehenden Verhältnisse ergeben sich insbesondere aus der ausschnittsweisen Zeichnung nach der Fig. 5. Die weiteren Durchlassöffnungen 37 im Stützrohr 36 sind in Form einer Perforation gebildet, die in Abkehr zu der Lösung nach der Fig. 2 im Stand der Technik nicht aus kreisrunden Durchlassöffnungen besteht, sondern wie die Fig. 5 zeigt, rechteckförmig ausgestaltet sind. Die dahingehenden Durchlassöffnungen 37 des Stützrohrs 36 stellen sicher, dass im Filtrierbetrieb der Vorrichtung es nicht ungewollt durch eine an sich geschlossene Stützrohrfläche zu einer Erhöhung des Widerstandes auf der Abgabeseite des Elementmaterials 20 kommt, was eventuell den Filtrierbetrieb mit der plissierten Filtermatte einschränken würde. Die Fig. 5 zeigt des Weiteren, wie der zylindrische Stützrohrmantel 36 mit der oberen Endkappe 22 verbunden, insbesondere verbördelt ist.

Wie des Weiteren die Fig. 4 zeigt, sind die Strömungsleiteinrichtungen 80 im Stützrohr 36 gruppenweise in gleicher Höhenlage zueinander angeordnet und mit gleichbleibenden vorgebbaren Abständen um das Stützrohr 36 herum durchgehend gruppiert.

Das in den Figuren 3 und 4 als Austauschelement gezeigte Filterelement 18 weist mithin das sich zwischen den beiden Endkappen 22, 24 erstreckende Elementmaterial 20 auf, das, wie bereits dargelegt, von dem Stützrohr 36 mit Durchlassöffnungen 37 umfasst ist. Zumindest ein Teil dieser Durchlassöffnungen 37 im Stützrohr 36 des Filterelementes 18 weist die Strömungsleiteinrichtung 80 auf, die dem Fluid eine Strömungsrichtung gibt, die von der Radialströmungsrichtung durch das Elementmaterial 20 von innen nach außen verschieden ist. Ist das dahingehende Filterelement partikulär entsprechend verschmutzt, lässt es sich, wie bereits für die Fig. 1 aufgezeigt, in einfacher Weise gegen ein entsprechendes Neuelement austauschen.

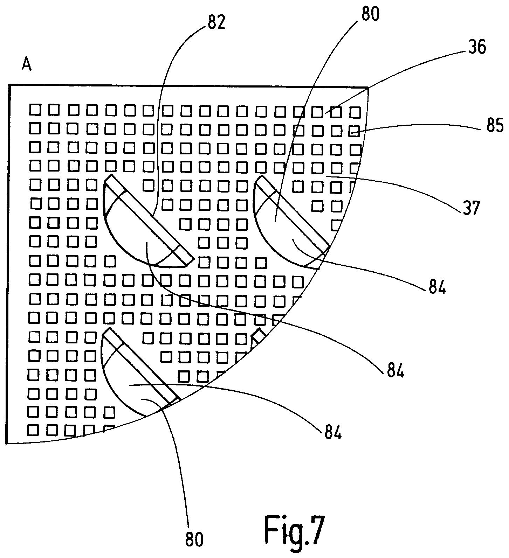

Das nachfolgende Ausführungsbeispiel nach den Figuren 6, 6a, 6b und 7 wird nur noch insofern erläutert, als es sich wesentlich von dem vorangegangenen Ausführungsbeispiel eines Stützrohres 36 mit Strömungsleiteinrichtungen 80 unterscheidet. Bei der Ausführungsform nach der Fig. 6 sind die Öffnungsquerschnitte 82 der einzelnen Strömungsleiteinrichtungen 80 in der anderen Richtung geneigt, d.h. sie verlaufen in einem Winkel α um 45° gegenüber der Längsachse 26 des Filterelementes 18 geneigt, in Blickrichtung auf die Figuren 6 und 7 gesehen von links oben nach rechts unten. Ferner ist das Stützrohr 36 gemäß der Darstellung nach der Fig. 6 in seiner abgewickelten Situation als ebener Blechzuschnitt wiedergegeben, der entsprechend zu einem Kreiszylinder aufgerollt mit seinen beiden gegenüberliegenden Längsrändern 86, 88 eine gemeinsame Schweiß-Längsnaht 90 bildet.

Des Weiteren zeigen die Figuren 6a, 6b entlang den Pfeilen X bzw. Y stirnseitige Ansichten auf das abgewickelte Stützrohr 36 in Form seines ebenen Mantels 85. Insbesondere wird hieraus die Taschengestaltung für die einzelnen Strömungsleiteinrichtungen 80 im Stützrohrmantel ersichtlich.

Aufgrund der gegenläufigen Ausrichtung der Öffnungsquerschnitte 82 für die Strömungsleiteinrichtung 80 erfolgt somit die Drallströmung entgegen dem Uhrzeigersinn um das Filterelement 18, gesehen in der Längsausrichtung desselben, herum. Je nachdem, wie man den Strömungswiderstand innerhalb des Stützrohrmantels 85 gestalten möchte, kann man auch mehr taschenartige Strömungsleiteinrichtungen 80 vorsehen, und die Anzahl der radialen Durchlassstellen 71 im Sinne einer Perforation verringern.

Die Strömungstaschen 84 in der Art von vorstehenden Kiemen am Stützrohr 36 respektive also die Strömungsleiteinrichtungen 80 können wie vorstehend dargelegt gleichmäßig über den gesamten Außenumfang des Stützrohres 36 verteilt sein. Es besteht aber bei nicht näher dargestellten Ausführungsformen die Möglichkeit, die dahingehenden Strömungstaschen 84 über den Umfang des Stützrohres 36 in anderer Anordnung zu verteilen. Beispielsweise könnten die Strömungstaschen 84 in der Art einer Clusteranordnung um das Stützrohr 36 herum gruppiert sein. Als besonders vorteilhaft hat es sich erwiesen, die Strömungstaschen 84 respektive die Strömungsleiteinrichtung 80 unter dem zu erwartenden Fluidniveau innerhalb des Vorratstanks am Stützrohr 36 anzuordnen. Bevorzugt sind dann die kiemenartigen Strömungsleiteinrichtungen 80 nebst den Strömungstaschen 84 in Blickrichtung auf die Figuren 1 bis 4 gesehen im unteren Drittel des Stützrohres 36 ausschließlich angeordnet, und ansonsten ist das Stützrohr 36 vollmantelig ausgebildet oder eben mit den bereits beschriebenen Durchlassöffnungen 37 in Rechteck- oder sonstiger Mehreckform sowie kreisrund oder elliptisch ausgebildet versehen.

Aufgrund der eingestellten Drallströmung über die jeweilige Strömungsleiteinrichtung des Stützrohres gelangt in geführter Weise das Fluid mit dem Lufteintrag über den zylindrisch gestalteten Fluidströmungsraum 66 an die fensterartigen Durchlassstellen 74 im Gehäuse 40, welches das Stützrohr 36 umgibt, was dann in überraschender Weise zu einem vermehrten Gasaustrag an den fensterartigen Durchlassstellen 74 des Gehäuses 40 führt bedingt durch den höheren Energieeintrag der Drallströmung in das mitzuführende Fluid. Die kiemenartig nach oben in Richtung des Fluidniveaus 68 vorstehenden Strömungsleiteinrichtungen 80 erlauben dabei eine direkte Ableitung des mit Luft versetzten Fluids oder Öls in Richtung des Fluidniveaus 68 und darüber hinaus, was den Luftaustrag noch weiter begünstigt. Dies hat so keine Entsprechung im Stand der Technik.

## Patentansprüche

1. Filtervorrichtung, insbesondere vorgesehen zum Einbau in einen Fluid-Vorratstank (10), mit mindestens einem, vorzugsweise austauschbaren Filterelement (18), dessen Elementmaterial (20) in radialer Richtung gesehen von innen nach außen von einem Fluid durchströmbar ist, das von einem Durchlassöffnungen (37) aufweisenden Stützrohr (36) umfasst ist, das jeweils unter Beibehalten eines vorgebbaren Radialabstandes und unter Bildung eines Fluidströmungsraumes (66) von einer Gehäusewand (44) eines Gehäuses (10) umgeben ist, die mehrere Durchlassstellen (74) aufweist, **dadurch gekennzeichnet, dass** zumindest ein Teil der Durchlassöffnungen (37) im Stützrohr (36) des Filterelementes (18) eine Strömungsleiteinrichtung (80) aufweist, dass die Durchlassöffnungen (37) dem Fluid eine Strömungsrichtung geben, die von der radialen Strömungsrichtung verschieden ist, und dass die Strömungsleiteinrichtung (80) dem Fluid, das durch das Stützrohr (36) hindurchtritt, eine Strömungsrichtung in der Art einer Drallströmung um das Stützrohr (36) herum gibt.

2. Filtervorrichtung nach Anspruch 1, **dadurch gekennzeichnet, dass** die Drallströmung entgegen dem Uhrzeigersinn gerichtet ist.

3. Filtervorrichtung nach Anspruch 1 oder 2, **dadurch gekennzeichnet, dass** alle Strömungsleiteinrichtungen (80) mit ihren freien Öffnungsquerschnitten (82) in eine gemeinsame Richtung weisen.

4. Filtervorrichtung nach einem der vorstehenden Ansprüche, **dadurch gekennzeichnet, dass** die jeweilige Strömungsleiteinrichtung (80) des Stützrohres (36) einen freien Öffnungsquerschnitt (82) begrenzt, der gegenüber der Längsachse des Filterelementes um einen Winkel α von 30° bis 60°, vorzugsweise um 45°, geneigt ist.

5. Filtervorrichtung nach einem der vorstehenden Ansprüche, **dadurch gekennzeichnet, dass** die jeweilige Strömungsleiteinrichtung (80) aus dem Material des Stützrohres (36) nach außen vorstehend als Strömungstasche (84) ausgebildet ist, deren oberer Rand den Öffnungsquerschnitt (82) für die Fluidabgabe der Strömungsleiteinrichtung (80) begrenzt.

6. Filtervorrichtung nach einem der vorstehenden Ansprüche, **dadurch gekennzeichnet, dass** die Strömungsleiteinrichtung (80) unter Bildung der Strömungstasche (84) aus dem Stützrohrmantel (85) von innen nach außen ausgeprägt oder ausgestanzt ist.

7. Filtervorrichtung nach einem der vorstehenden Ansprüche, **dadurch gekennzeichnet, dass** neben der jeweiligen Strömungsleiteinrichtung (80) das Stützrohr (36) weitere Durchlassöffnungen (37) aufweist, die gruppenweise die jeweilige Strömungsleiteinrichtung (80) umfassen, und dass die Summe der freien Öffnungsquerschnitte (82) von Strömungsleiteinrichtungen (80) und Durchlassöffnungen (37) einander entsprechen oder dass die Summe der freien Öffnungsquerschnitte (82) der Strömungsleiteinrichtungen (80) kleiner als die der Durchlassöffnungen (37) im Stützrohr (36) ist.

8. Filtervorrichtung nach einem der vorstehenden Ansprüche, **dadurch gekennzeichnet, dass** die Strömungsleiteinrichtungen (80) im Stützrohr (36) in jeweils gleicher Höhenlage und mit gleichbleibenden vorgebbaren Abständen um das Stützrohr (36) herum gruppiert sind.

9. Filterelement (18) mit einem sich zwischen zwei Endkappen (22, 24) erstreckenden Elementmaterial (20), das von einem Stützrohr (36) mit Durchlassöffnungen (37) umfasst ist, wobei zumindest ein Teil der Durchlassöffnungen (37) im Stützrohr (36) des Filterelementes (18) eine Strömungsleiteinrichtung (80) aufweisen, wobei die Durchlassöffnungen (37) dem Fluid eine Strömungsrichtung geben, die von der Radialströmungsrichtung durch das Elementmaterial (20) verschieden ist, **dadurch gekennzeichnet, dass** die Strömungsleiteinrichtung (80) dem Fluid, das durch das Stützrohr (36) hindurchtritt, eine Strömungsrichtung in der Art einer Drallströmung um das Stützrohr (36) herum gibt.

## Claims

1. Filter device, particularly intended for installation in a fluid storage tank (10), with at least one preferably exchangeable filter element (18), a fluid being able to flow through the element material (20) of said filter element in the radial direction viewed from the inside outwards, said fluid being enclosed by a support tube (36) comprising outlet openings (37), said tube being surrounded by a housing wall (44) of a housing (10) while maintaining a specifiable radial distance and forming a fluid flow chamber (66), said filter device comprising a plurality of outlet points (74), **characterised in that** at least some of the outlet openings (37) in the support tube (36) of the filter element (18) comprise a flow guide device (80), **in that** the outlet openings (37) give the fluid a flow direction which is different from the radial flow direction, and **in that** the flow guide device (80) gives the fluid passing through the support tube (36) a flow direction around the support tube (36) in the manner of a swirling flow.

2. Filter device according to claim 1, **characterised in that** the swirling flow is directed anti-clockwise.

3. Filter device according to either claim 1 or claim 2, **characterised in that** all flow guide devices (80) point in the same direction with their free opening cross-sections (82).

4. Filter device according to any one of the preceding claims, **characterised in that** each flow guide device (80) of the support tube (36) defines a free opening cross-section (82), which is inclined by an angle α of 30° to 60°, preferably 45°, with respect to the longitudinal axis of the filter element.

5. Filter device according to any one of the preceding claims, **characterised in that** each flow guide device (80) is formed from the material used to make the support tube (36) and protrudes outwards as a flow pocket (84), the upper edge of which defines the opening cross-section (82) for fluid discharge from the flow guide device (80).

6. Filter device according to any one of the preceding claims, **characterised in that** the flow guide device (80) is stamped or punched from the inside outwards to form the flow pocket (84) from the support tube sheathing (85).

7. Filter device according to any one of the preceding claims, **characterised in that**, in addition to each flow guide device (80), the support tube (36) comprises additional outlet openings (37), which enclose each flow guide device (80) in groups, and **in that** the sum of the free opening cross-sections (82) of the flow guide devices (80) and outlet openings (37) correspond to one another, or **in that** the sum of the free opening cross-sections (82) of the flow guide devices (80) is smaller than the sum of the outlet openings (37) in the support tube (36).

8. Filter device according to any one of the preceding claims, **characterised in that** the flow guide devices (80) in the support tube (36) are each grouped at the same height and at the same specifiable distances around the support tube (36).

9. Filter element (18) with an element material (20) extending between two end caps (22, 24), said element being enclosed by a support tube (36) with outlet openings (37), at least some of the outlet openings (37) in the support tube (36) of the filter element (18) comprising a flow guide device (80), said outlet openings (37) giving the fluid a flow direction which is different from the radial flow direction through the element material (20), **characterised in that** the flow guide device (80) gives the fluid passing through the support tube (36) a flow direction around the support tube (36) in the manner of a swirling flow.

## Revendications

1. Dispositif de filtration prévu notamment pour être monté dans une cuve réservoir (10) de fluide, comprenant au moins un élément (18) de filtre, de préférence échangeable, dont le matériau (20) peut, considéré dans la direction radiale, être traversé de l'intérieur à l'extérieur par un fluide, matériau, qui est entouré d'un tuyau (36) d'appui, ayant des ouvertures (37) de passage, tuyau, qui, en conservant une distance radiale pouvant être donnée à l'avance et avec formation d'un espace (66) d'écoulement de fluide, est entouré d'une paroi (44) d'une enveloppe (10), ayant plusieurs points (74) de passage, **caractérisé en ce qu'**au moins une partie des ouvertures (37) de passage du tuyau (36) d'appui de l'élément (18) de filtre a un dispositif (80) de conduite d'un écoulement, **en ce que** les ouvertures (37) de passage donnent au fluide une direction d'écoulement différente de la direction d'écoulement radiale et **en ce que** le dispositif (80) de conduite d'écoulement donne au fluide, qui passe dans le tuyau (36) d'appui, une direction d'écoulement à la manière d'un écoulement tourbillonnaire autour du tuyau (36) d'appui.

2. Dispositif de filtration suivant la revendication 1, **caractérisé en ce que** l'écoulement tourbillonnaire est disposé dans le sens contraire au sens des aiguilles d'une montre.

3. Dispositif de filtration suivant la revendication 1 ou 2, **caractérisé en ce que** tous les dispositifs (80) de conduite d'écoulement sont tournés, par leur section (82) transversale d'ouverture libre, dans une direction commune.

4. Dispositif de filtration suivant l'une des revendications précédentes, **caractérisé en ce que** le dispositif (80) de conduite d'écoulement respectif du tuyau (36) d'appui délimite une section (82) transversale d'ouverture libre, qui est inclinée, par rapport à l'axe longitudinale de l'élément de filtre, d'un angle α de 30° à 60°, de préférence de 45°.

5. Dispositif de filtration suivant l'une des revendications précédentes, **caractérisé en ce que** le dispositif (80) de conduite d'écoulement respectif, en le matériau du tuyau (36) d'appui, est constitué sous la forme d'une poche (84) d'écoulement en saillie vers l'extérieur, dont le bord supérieur délimite la section (82) transversale d'ouverture pour la distribution de fluide du dispositif (80) de conduite d'écoulement.

6. Dispositif de filtration suivant l'une des revendications précédentes, **caractérisé en ce que** le dispositif (80) de conduite d'écoulement est, en formant la poche (84) d'écoulement, estampé ou poinçonné de l'intérieur vers l'intérieur à partir de la surface (85) latérale du tuyau d'appui.

7. Dispositif de filtration suivant l'une des revendications précédentes, **caractérisé en ce qu'**outre le dispositif (80) de conduite d'écoulement respectif, le tuyau (36) d'appui a d'autres ouvertures (37) de passage, qui comprennent, groupe par groupe, le dispositif (80) de conduite d'écoulement respectif et **en ce que** les sommes des sections (82) transversales d'ouverture libre des dispositifs (80) de conduite d'écoulement et des ouvertures (37) de passage se correspondent ou **en ce que** la somme des sections (82) transversales d'ouverture libre des dispositifs (80) de conduite d'écoulement est plus petite que celle des ouvertures (37) de passage du tuyau (36) d'appui.

8. Dispositif de filtration suivant l'une des revendications précédentes, **caractérisé en ce que** les dispositifs (80) de conduite d'écoulement dans le tuyau (36) d'appui sont regroupés autour du tuyau (36) d'appui en une même position en hauteur et à des distances restant constantes pouvant être données à l'avance.

9. Elément (18) de filtre, ayant un matériau (20) d'élément, qui s'étend entre deux coiffes (22, 24) d'extrémité et qui est entouré d'un tuyau (36) d'appui ayant des ouvertures (37) de passage, au moins une partie des ouvertures (37) de passage du tuyau (36) d'appui de l'élément (18) de filtre ayant un dispositif (80) de conduite d'écoulement, les ouvertures (37) de passage, donnant au fluide une direction d'écoulement, qui est différente de la direction d'écoulement radiale dans le matériau (20) d'élément, **caractérisé en ce que** le dispositif (80) de conduite d'écoulement donne au fluide, qui passe dans le tuyau (36) d'appui, une direction d'écoulement à la manière d'un écoulement tourbillonnaire autour du tuyau (36) d'appui.
